Europäisches Patentamt

European Patent Office

Office européen des brevets

(19)

(11) Veröffentlichungsnummer: **0 238 687**
**B1**

## (12) EUROPÄISCHE PATENTSCHRIFT

(45) Veröffentlichungstag der Patentschrift:
13.12.89

(21) Anmeldenummer: 86104195.2

(22) Anmeldetag: 26.03.86

(51) Int. Cl.⁴: **C09D 3/58**, C08K 3/34,
C08K 9/06, C08L 63/00

(54) **Verwendung einer Epoxidharzbeschichtung zum Schutz von Betonoberflächen, auch gegen chlorierte Kohlenwasserstoffe.**

(43) Veröffentlichungstag der Anmeldung:
30.09.87 Patentblatt 87/40

(45) Bekanntmachung des Hinweises auf die Patenterteilung:
13.12.89 Patentblatt 89/50

(84) Benannte Vertragsstaaten:
AT BE CH DE FR GB IT LI LU NL SE

(56) Entgegenhaltungen:
FR-A- 1 220 676

CHEMICAL ABSTRACTS, Band 89, Nr. 4, 4. Juli 1978,
Seite 45, Zusammenfassung Nr. 25437y, Columbus,
Ohio, US; & JP-A-78 09 267 (MATSUSHITA ELECTRIC
INDUSTRIAL CO. LTD.) 04-04-1978

(73) Patentinhaber: SCHOMBURG & CO. KG Fabrik für
chemischen Bautenschutz,
Wiebuschstrasse 2-6 Postfach 701, D-4930 Detmold(DE)

(72) Erfinder: Helmdach, Volker, Triftenberg 2,
D-4934 Horn-Bad Meinberg(DE)
Erfinder: Adler, Jürgen, Dr., Mittelstrasse 50,
D-4930 Detmold(DE)
Erfinder: Distler, Harry, Dr., Triftenberg 2,
D-4934 Horn-Bad Meinberg(DE)

## Beschreibung

Die Erfindung bezieht sich auf die Verwendung von lösungsmittelbeständigen Epoxidharzbeschichtungen, insbesondere beständig gegen chlorierte Kohlenwasserstoffe.

Es ist bekannt, daß das Problem der Beschichtung von betonierten Flächen, welche gegenüber Lösungsmitteln, insbesondere gegenüber chlorierten Kohlenwasserstoffen beständig und undurchlässig sind, technisch noch nicht befriedigend gelöst ist.

So lassen sich z.B. bis heute betonierte Tanklagertassen nur unbefriedigend oder überhaupt nicht schützen, um ausgelaufene Lösungsmittel zurückzuhalten. Das Eindringen bzw. Durchdringen, von Lösungsmitteln, insbesondere von chlorierten Kohlenwasserstoffen durch den Beton in das Erdreich, würde das Grundwasser und damit die Ökologie gravierend gefährden.

Man hat verschiedentlich versucht, durch Aufbringen von Epoxidharzbeschichtungen auf den Beton dieser Probleme Herr zu werden.

Herkömmliche Epoxidharzbeschichtungen sind, wie man inzwischen weiß, nicht beständig gegenüber Lösungsmitteln. Das gilt ganz besonders für chlorierte Kohlenwasserstoffe wie z.B. Methylenchlorid, Trichlorethylen etc. Letztere sind derart aggressiv, daß eine Epoxidharzbeschichtung nach wenigen Minuten durch Aufquellung zerstört wird.

Betonierte Großtankanlagen für organische Lösungsmittel, insbesondere für chlorierte Kohlenwasserstoffe, stellen ohne geeigneten Oberflächenschutz im Fall einer Leckage ein nicht zu übersehendes Risiko für Grundwasser und Ökologie dar. Umweltschutz und allgemeine Sicherheit drängen daher seit langem auf eine Lösung dieses prekären Problems.

Die japanische Patentanmeldung 7 271 007 beschreibt eine Mischung aus Epoxidharz und Calziumsilikat, die durch silane Oberflächen behandelt ist, welche Mischung durch ein thermisches Verfahren behandelt ist.

Es wurde nun überraschend gefunden, daß man Epoxidharzbeschichtungen erhält, welche gegenüber Lösungsmitteln, insbesondere gegenüber chlorierten Kohlenwasserstoffen, beständig sind, wenn man auf eine mit einem Epoxidharz vorgrundierte Betonfläche eine Mischung aus Epoxidharz und einem Füllmittel, bestehend aus Silikaten der Erdmetalle, die durch substituierte Silane oberflächenbehandelt sind, aufbringt.

Als Epoxidharz eignen sich besonders Reaktionsprodukte von Bisphenol A und Epichlorhydrin (Bisphenol-A-diepoxid) mit einem mittleren Molekulargewicht von 380–400. Als Härterkomponenten werden die in der Epoxidchemie üblicherweise verwendeten polyfunktionellen Amine, insbesondere aromatische Diamine wie z.B. 4,4′-Diaminodiphenylmethan, eingesetzt.

Als Füllmittel eignen sich Silikate der Erdmetalle wie z.B. Calziumsilikate und Magnesiumsilikate. Diese können sowohl synthetischen als auch mineralischen Ursprungs sein. Besonders lösungsmittelbeständige Beschichtungen erhält man, wenn man silanisierte Erdmetallsilikate einsetzt. Diese Oberflächenbehandlung besteht im Aufbringen von Epoxy- bzw. Aminosilanhaftvermittlern auf die Füllstoff-Partikel. Die Silanisierung der silikatischen Oberflächen erfolgt im allgemeinen mit verschiedenen substituierten Trimethoxy- oder Triethoxysilanen wie z.B. γ-Glycidoxypropyltrimethoxysilan, wobei das entsprechende Epoxisilan entsteht. Darüber hinaus können noch weitere reaktive Silangruppen wie z.B. Vinyltrimethoxysilan, γ-Methacryloxpropyltrimethoxy-silan oder γ-Aminopropyltriethoxy-silan auf die Silikatoberfläche aufgepfropft werden. Der Gehalt an reaktiven Silangruppen auf der Silikatoberfläche kann beliebig von 0,01–3%, insbesondere von 0,5–1% eingestellt werden. Manchmal ist es auch vorteilhaft, Mischungen von verschiedenen silanisierten Erdalkalisilikaten zu verwenden. Dadurch kann das Harz chemisch mit der Füllstoffoberfläche reagieren, wodurch das Eindringen von Lösungsmitteln in die Grenzschicht von Füllstoffen und Harz erschwert oder völlig unterbunden wird. Bei Silikaten mineralischen Ursprungs können auch Beimengungen von Calzium- und Magnesiumcarbonaten oder auch Alumosilikaten in geringeren Mengen vorhanden sein, ohne daß die Lösungsmittelbeständigkeit der Epoxidharzschutzschicht leidet.

Es empfiehlt sich, das silikatische Füllmittel, egal welcher Provenienz, durch Mahlung in einem Mikronizer auf feinste Körnung zu bringen, wobei nur bestimmte (optimierte) Korngrößenverteilungen zu den genannten lösungsmittelbeständigen Epoxidharzbeschichtungen führen. In der Regel verwendet man Körnungen von 2 bis 10 μm.

Epoxidharz (Bindemittel) und Füllstoff (EA-Silikate) werden im allgemeinen im Verhältnis 100 Teile : 100 Teile eingesetzt. Der Füllstoffanteil kann aber auch erhöht oder erniedrigt werden, so z.B. auf 50 Teile bis 150 Teile bezogen auf 100 Teile Epoxidharz. Die Zubereitung des Epoxidharzes erfolgt bei Temperaturen von 0–50°C durch Zusammengeben des Epoxides mit dem Härter bei langsam laufendem Rührwerk. Danach wird unter gleichen Rührbedingungen der Füllstoffanteil dazugegeben.

Eine bevorzugte Ausführungsform des Beschichtungsverfahrens ist wie folgt: Die gereinigte und bei Unebenheiten ggf. gespachtelte Betonfläche wird mit einem Epoxidharz in einer Schichtdicke von 0,5–0,6 mm grundiert. Nach einer Abbindezeit von 18–24 h wird bei ca. 20°C eine Mischung aus 100 Teilen Epoxidharz (Bindemittel) und 100 Teilen Füllstoff der Körnung 2–10 μm in Form eines Erdalkalisilikates, welches ca. 1% Epoxisilan enthält, aufgebracht. Man läßt bei Umgebungstemperatur ausreagieren. Die Schichtdicke beträgt 2–4 mm.

Derartige Schutzbeschichtungen zeichnen sich dadurch aus, daß sie gegenüber chlorierten Kohlenwasserstoffen beständig sind. Dies gilt im besonderen Maße für Methylenchlorid, das bisher Reaktionsharzbeschichtungen jeder Art zerstörte. Die in den Beispielen genannten Teile sind Gewichtsteile.

## Beispiel 1

Herstellung des Epoxidharzes (Bindemittel): 100 Teile Epoxidharz auf der Basis von Bisphenol-A-Diepoxid werden mit 62 Teilen Härter unter Rühren gemischt. Der Härter setzt sich aus der Härterkomponente A und der Härterkomponente B zusammen, die im Verhältnis 1:2 stehen.

Die Härterkomponente A besteht aus 90 Teilen, 4,4'-Diaminodiphenylmethan und 10 Teilen Benzylalkohol.

Die Härtekomponente B besteht aus 90 Teilen 4,4'-Diaminodiphenylmethan, 8 Teilen Benzylalkohol und 2 Teilen Benzoesäure.

Das Epoxidharz ist für die Grundierung von zementgebundenen Flächen wie Beton oder Estrich geeignet. Bei 20°C dauert der Abbindevorgang 18–24 h. Bei höheren Luft- oder Objekttemperaturen, so z.B. bei 30–40°C ist der Abbindevorgang nach ca. 8 h beendet.

Herstellung der Schutzbeschichtung: Unter langsamen Rühren werden 100 Teile Bindemittel und 100 Teile Füllstoff eines silanisierten Erdalkalisilikates mit einem Anteil von ca. 1% Epoxisilan zusammengegeben. Diese Mischung wird auf die vorbereitete Grundierung in einer Schichtdicke von 2–4 mm aufgetragen. Je nach Luft- oder Objekttemperatur läßt man die Beschichtung 8 bs 24 h ausreagieren. Die Schutzbeschichtung ist nach dem Abbinden beständig gegen Laugen, Säuren und Lösungsmittel, insbesondere gegenüber chlorierten Kohlenwasserstoffen.

## Beispiel 2

Herstellung des Epoxidharzes: 100 Teile Bindemittel auf der Basis von Bisphenol-A-Diepoxid werden mit 62 Teilen Härterkomponente B unter Rühren gemischt. Mit dieser Mischung wird die zu beschichtende Betonfläche grundiert. Die Aushärtungszeit beträgt 10–15 h bei 20°C.

Herstellung der Schutzbeschichtung: Unter langsamen Rühren werden 100 Teile Bindemittel und 100 Teile Füllstoff in Form eines epoxisilanisierten Erdalkalisilikates der Körnung 2–10 μm zusammengegeben. Diese Mischung wird auf die vorbereitete Grundierung in einer Schichtstärke von 2–4 mm aufgetragen. Die Aushärtezeit beträgt bei 20°C 10–15 h.

Die erhaltene Schutzbeschichtung zeichnet sich durch hohe Säure- und Laugenbeständigkeit sowie Resistenz gegen organische Lösungsmittel, insbesondere chlorierte Kohlenwasserstoffe, aus.

## Beispiel 3

Herstellung des Epoxidharzes: wie im Beispiel 2 beschrieben.

Herstellung der Schutzbeschichtung: Unter langsamen Rühren werden 100 Teile Bindemittel und 100 Teile Füllstoff in Form eines methacrylsilanisierten (ca. 1%) Erdalkalisilikates der Körnung 2–10 μm zusammengegeben. Diese Mischung wird auf die vorbereitete Grundierung in einer Schichtdicke von 2–4 mm aufgetragen. Die Aushärtezeit beträgt bei 20°C 10–15 h.

## Beispiel 4

Elektrostatische Ladung ableitende Beschichtung: Wie im Beispiel 2 beschrieben, werden unter langsamen Rühren 100 Teile Bindemittel, 50–70 Teile Füllstoff und 30–50 Teile Graphit oder eines anderen leitfähigen Füllstoffes zusammengegeben. Diese Mischung wird auf eine mit einer geerdeten und mit Leitlack versehenen Grundierung aufgetragen. Die Schichtstärke der Schutzbeschichtung beträgt 2,5 mm. Der Ableitwiderstand beträgt hier ca. $10^8$ Ohm.

Zur Erzielung einer rutschfesten bzw. rutschhemmenden Schutzbeschichtung erfolgt eine Oberflächenbehandlung mit feuergetrocknetem Kristallquarz bzw. Siliciumcarbid der Körnung 0,1–0,3 bzw. 0,3–0,5 mm ∅.

## Patentansprüche

Verwendung einer Epoxidharz-Beschichtung, bestehend aus einem Epoxidharz und einem Füllstoff, enthaltend mit substituierten Silanen oberflächenbehandelte Silikate der zweiwertigen Erdmetalle, zum Schutz von mit Epoxidharz grundierten Betonoberflächen gegen den Angriff von chlorierten Kohlenwasserstoffen.

## Claims

Application of an epoxy resin coating, consisting of an epoxy resin and a filler, containing silicates of the bivalent earth metals surface treated with substituted silanes for the protection of concrete surfaces, primed with epoxy resins, against corrosion through chlorinated hydrocarbons.

## Revendications

Utilisation d'un revêtement d'epoxy-résine, consistant en une epoxy-résine et une matière inerte, contenant des silicates de métaux terreux bivalents dont la surface a été traitée de silanes substitués pour la protection de surfaces bétonnées imprimées d'epoxy-résine, contre la corrosion d'hydrocarbures chlorés.